# EUROPEAN PATENT APPLICATION

(11) **EP 1 138 573 A1**
(43) Date of publication of application: **04.10.2001**
(21) Application number: 01302581.2
(22) Date of filing: 20.03.2001
(51) Int. Cl.: B62B 13/08

(54) **Skiing device**

(30) Priority: 30.03.2000 GB 0007777
(71) Applicant: Podmore, Nicholas Guy, London SE1 4HG (GB)
(72) Inventor: Podmore, Nicholas Guy, London SE1 4HG (GB)
(74) Representative: Hedley, Nicholas James Matthew

(57) **Abstract**

A skiing device comprising:
- a frame (10) having a front end and a rear end and an axis (11) extending between the front and the rear ends;
- a front shaft (22) rotatably connected to the front end of the frame to allow the shaft to turn about an axis (22) that is transverse to the axis of the frame;
- a handle (26) to turn the front shaft;
- a pair of front legs (34) each of which is mounted on the front shaft by a first pivot (26,27,32) that allows the front legs to be brought together or splayed apart such that the angle of splay between the legs can varied;
- a rear shaft (23) rotatably connected to the rear end of the frame to allow the rear shaft to turn about an axis that is transverse to the axis of the frame;
- a pair of rear legs (34) each of which is mounted on the rear shaft by a second pivot (26,27,32) that allows the rear legs to be brought together or splayed apart such that the angle of splay between the legs can varied; and
- pair of skis (46), each ski being secured to one front leg and one rear leg by joints (38-44) that allow the legs to pivot with respect to the skis whereby each of the skis can be moved forwardly or backwardly with respect to the other by turning the handle (26).

## Description

### Field of the Invention

The present invention relates to a skiing device.

### Background

In order to ski well, an individual must be reasonable fit and possess a high degree of skill and agility in order to maximise enjoyment. Many snow sports are known as alternatives to skiing, for example sledging and tobogganing but, although these are generally easier and require lower levels of fitness and agility, they are also generally thought to be less enjoyable and exhilarating than skiing.

However, skiing is hazardous and the breaking or fracture of limbs is relatively common.

It is the objective of the present invention to provide a device that requires a lower degree of skill, fitness, co-ordination and agility before a similar level of excitement, exhilaration and enjoyment as skiing can be obtained.

It is a further object of the present invention to provide a device that will reduce the risk of injury during winter sports, as compared to skiing.

### Disclosure of the Invention

Accordingly, the present invention provides a skiing device comprising:
- a frame having a front end and a rear end and an axis extending between the front and the rear ends;
- a front shaft rotatably connected to the front end of the frame to allow the shaft to turn about an axis that is transverse to the axis of the frame;
- a handle to turn the front shaft;
- a pair of front legs each of which is mounted on the front shaft by a first pivot that allows the front legs to be brought together or splayed apart such that the angle of splay between the legs can varied;
- a rear shaft rotatably connected to the rear end of the frame to allow the rear shaft to turn about an axis that is transverse to the axis of the frame;
- a pair of rear legs each of which is mounted on the rear shaft by a second pivot that allows the rear legs to be brought together or splayed apart such that the angle of splay between the legs can varied;
- a pair of skis, each ski being secured to one front leg and one rear leg by joints that allow the legs to pivot with respect to the skis whereby each of the skis can be moved forwardly or backwardly with respect to the other by turning the handle.

By using the skiing device of the present invention, individuals will no longer need to expend a large amount of time, effort and perseverance in acquiring the necessary skills in order enjoy a winter sport that has an exhilaration comparable to that of skiing. This is because the device assists the skier to balance and co-ordinate skis, which are two of the hardest aspects of skiing to master.

The device of the present invention can be used on ski/snowboard slopes and "off-piste", as well as for purpose built so-called "border cross" tracks, both indoor and outdoor. As it functions in a similar manner to skis, the device of the present invention can be used for downhill racing, slalom and trick riding, in addition to border cross type courses and traditional slope skiing. The device of the present invention can also be used in water skiing. The device of the present invention allows individuals, regardless of age, gender or even physical impairment, to use it and enjoy the thrill of skiing.

### Brief Description of the Drawings

There will now be described, by way of example only, a device in accordance with the present invention by reference to the accompanying drawings in which:
Figure 1 is a isometric view of a device in accordance with the present invention;
Figure 2 is a front view of the device;
Figure 3 is the side view of the device;
Figure 4 is the top view of the device;
Figure 5 is a front view of the device showing the way in which individual components of the device can be moved.
Figure 6 is the a top view of the device showing how the elements of the device can be moved in respect to one another;
Figure 7 is a front view of the device showing the movement of elements of device in use;
Figure 8 is a top view showing how elements of the device can be moved in order to manoeuvre the device;
Figure 9 is the side view of the device, showing how it may be compacted for carrying;
Figures 10 and 11 show components of the device, in detail;
Figure 12 is the side view of the device showing boot bindings for the skis;
Figure 13 is a close up of a boot binding for use of the device of the present invention;
Figure 14 shows alternative frame constructions;
Figure 15 shows alternative leg constructions.

### Description of the Preferred modes of the Invention

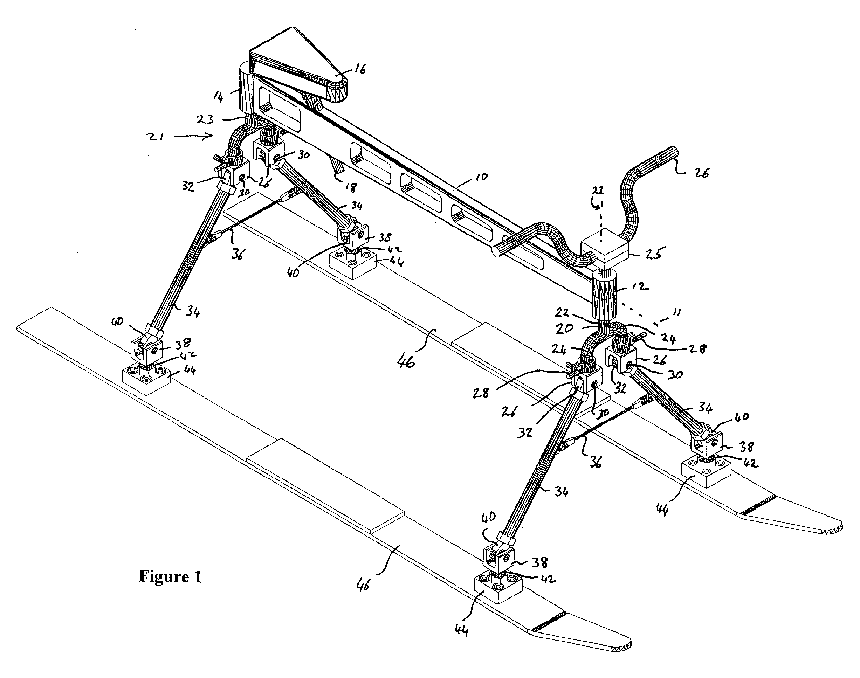

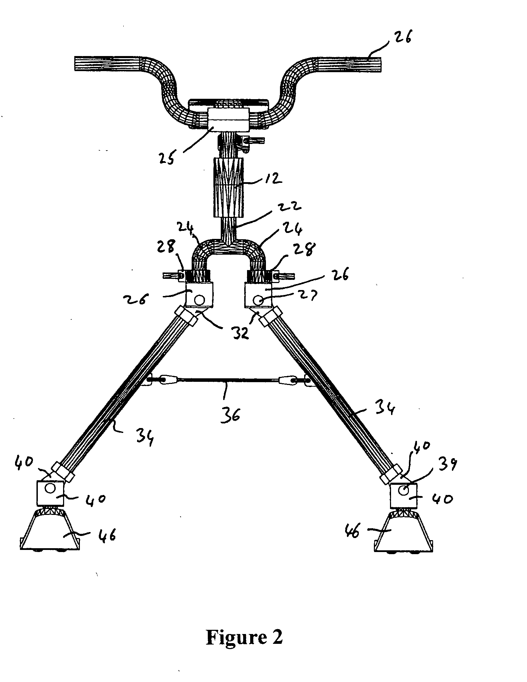

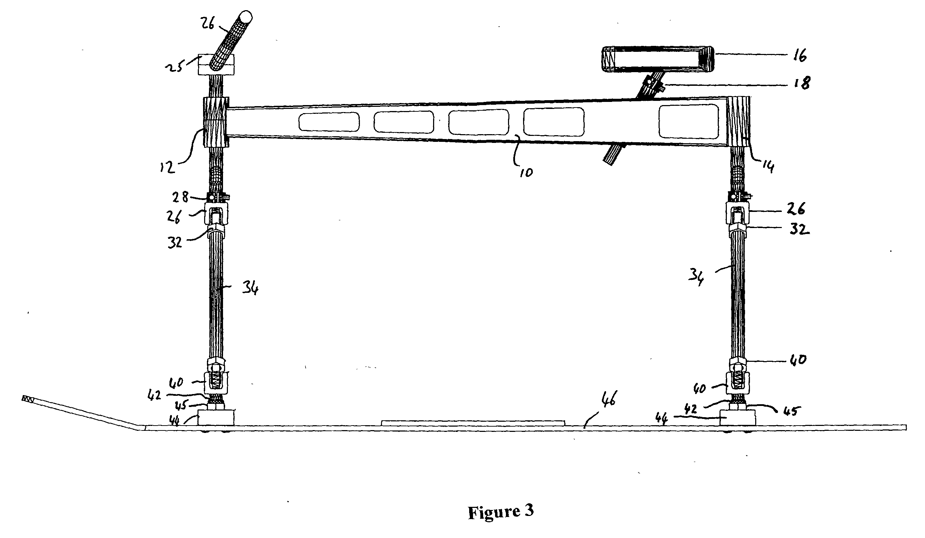

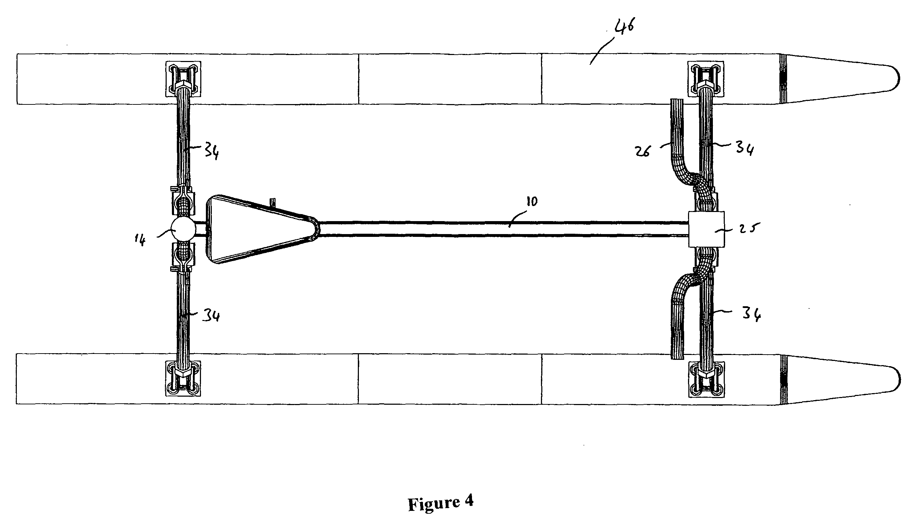

Referring initially to Figures 1 to 4, there is shown a frame 10 having a front headstock 12 welded at one end and a rear headstock 14 welded at the rear end of the frame. A saddle 16 and a saddle post 18 are adjustably supported on the frame 10.

A forked shaft 20 passes through the front headstock 12 and can be rotated about an upright axis 22 that is generally transverse (and in this case perpendicular) to the axis 11 of the frame extending from the front to the rear of the frame. The forked shaft 20 has a shaft section 22 that passes through the headstock 12 and a pair of forked arms 24 secured to the bottom of the shaft 22. The headstock 12 and the forked shaft 20 are derived from standard bicycle components, the forked shaft being obtained by cutting off the bottom end of the front forks of a BMX bicycle. A handle bar clamp 25 is secured to the top of the shaft 22 and handlebars 26 are secured to clamp 25. Clamp 25 and handle bars 26 are also standard bicycle components.

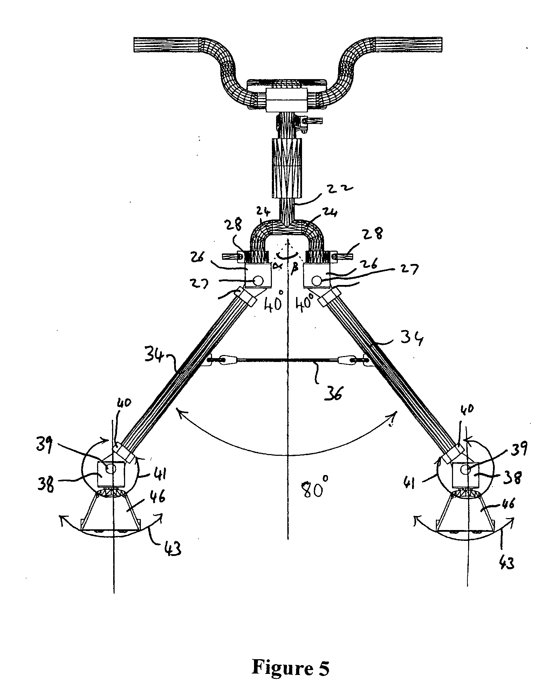

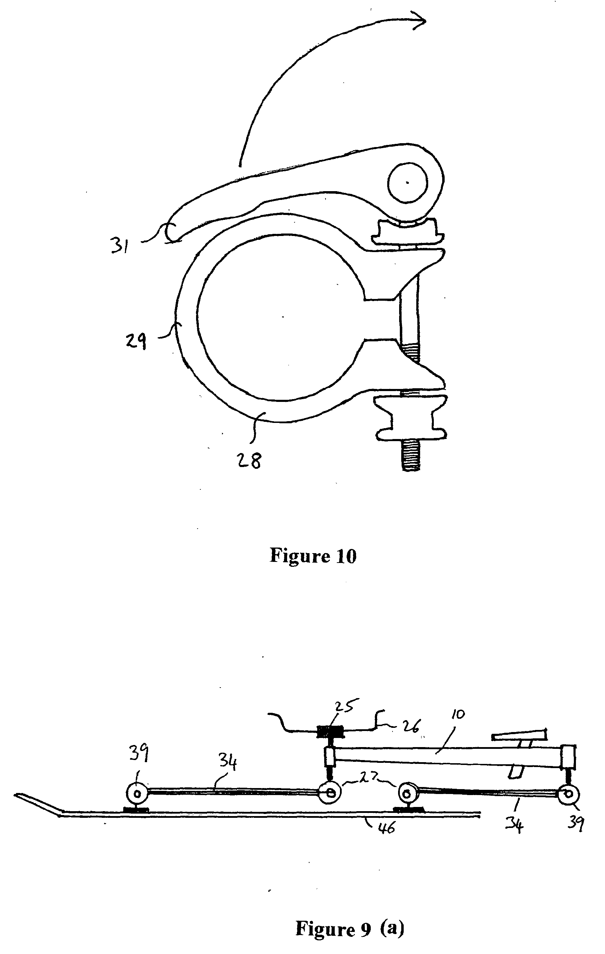

The cut off end of fork arms 24 are provided with an internal screw thread and at least one axial slot is made in the wall at the bottom end of the arms 24 (not shown). A "U"-shaped clavis 26 is secured to the fork arms 24 by means of male threads on the clavis engaging with the internal thread of the arms 24. For reasons described below, the clavis 26 is not screwed all the way into the fork arm 24. However, each clavis 26 is prevented from further turning on the screwed threads by means of quick release clamps 28 that includes a band 29 (see Figure 10) that encircles the end of a fork arm 24; the clamp also includes a lever 31 that, in the position shown in Figure 10, tightens the band 29 on the fork arms 24 and clamps the fork onto the clavis screw thread, thereby preventing the clavis 26 from turning with respect to the fork arms on the screw thread. The clamping of the fork arm 24 on the screw thread of the clavis 26 is assisted by the slot in the arm 24 described above. The quick release clamps 28 can be released by moving the lever (see Figure 10) in the clockwise direction. Each clavis 26 has a pin 27 (not visible in Figure 1 but see Figure 5) extending between holes 30 in the arms of each "U"-shaped clavis. The pins 27 pass through the clavis arms and through a rod end 32 secured at the top end of legs 34. Thus, leg 34 can pivot about the clavis towards and away from each other. However, a flexible tie 36 limits the movement of the legs 34 apart.

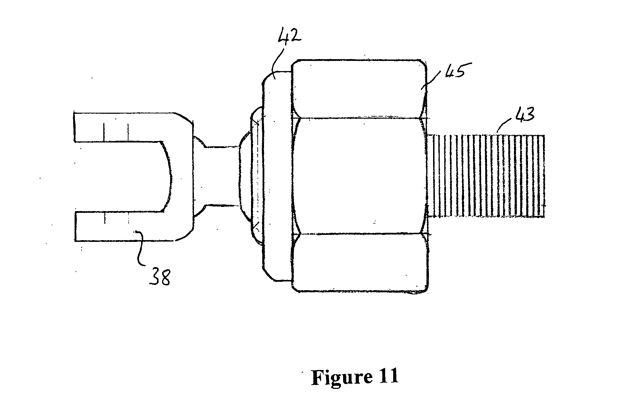

A further rod-end-and-clavis pivot 38, 40 is secured at the bottom end of each of the legs 34. The clavis 38 is attached to a ball 42 that rotates within a socket 45 secured to a block 44 by means of a screw thread 43 (see Figure 11) formed on the base of the socket 45. The block 44 is bolted onto the skis 46.

The arrangement of the rear legs is similar to that of the front legs with the exception that the top of the rear headstock 14, which can also be derived from a corresponding bicycle component, is capped off, the shaft 23 of the rear forks 21 is shorter than the front shaft 20 and no handle bars are provided. Similar reference numbers are used in the description of the rear legs to denote similar components as already described in connection with the front legs.

Referring now to Figure 5, it can be seen that the front legs 34 can pivot about pin 27in the top clavis-and-rod-end pivot 26 to 32. In this way, the legs 34 can be brought together or splayed apart. However, the flexible tie 36 limits the splay angle (α plus β) to 80°, although a larger or smaller display angle can be achieved by altering the length of tie 36. It will be observed that the front legs 34 can be moved independently of each other and therefore the two angles α and β are not necessarily equal.

The legs 34 can also pivot about the lower rod-end-and-clavis pivot 38 to 40, as shown by arrows 41.

The skis 46 can also pivot with respect of the clavis 38 about ball and socket joint 42, 44, as shown by arrows 43 and this allows the skier the ability to control the movement of the device using the edges of the skis, in a manner similar to conventional skiing.

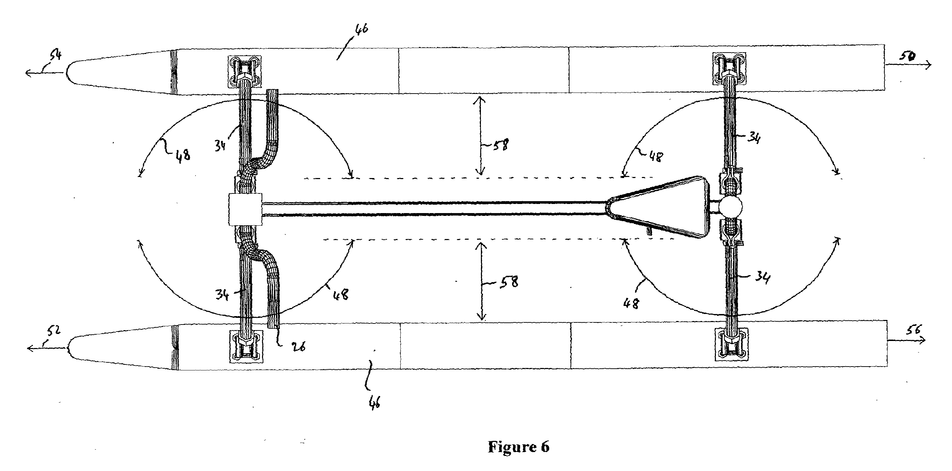

Referring now to Figure 6, arrows 48 show the movement of the legs 34 when the handle bars 26 are moved. When the handle bars 26 are moved in a clockwise direction (as viewed in Figure 6), the right-hand ski 46 moves backwards as shown by arrow 50 and the bottom ski 46 moves forward (see arrow 52). On turning the handle bars anti-clockwise, the reverse movement occurs, that is to say the right hand ski moves forward (arrow 54) and the left hand ski moves backwards (arrow 56).

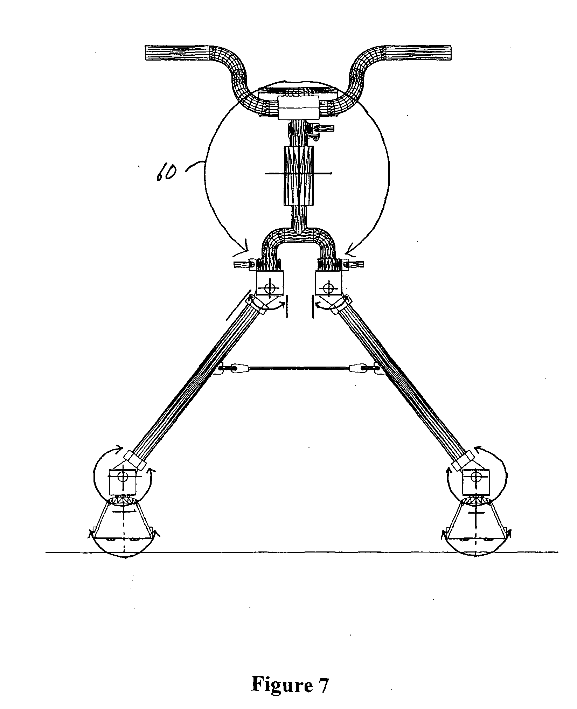

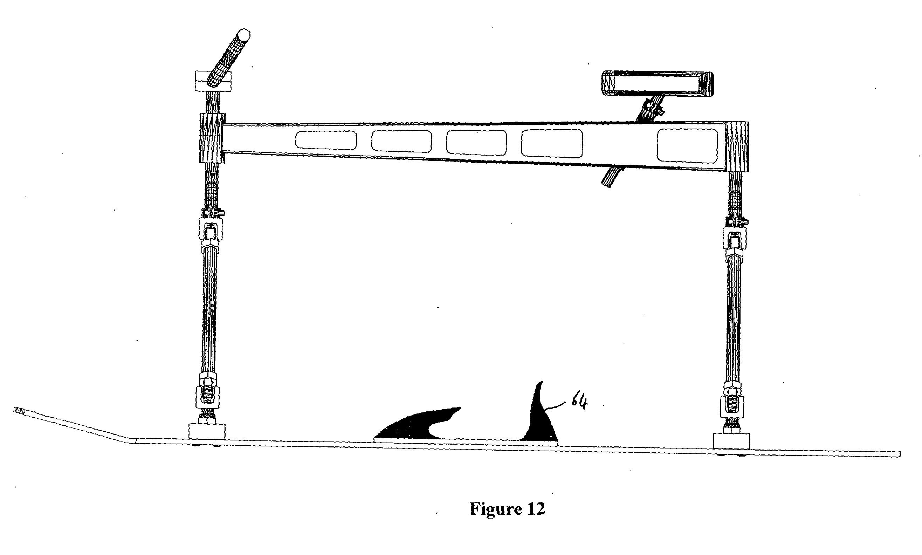

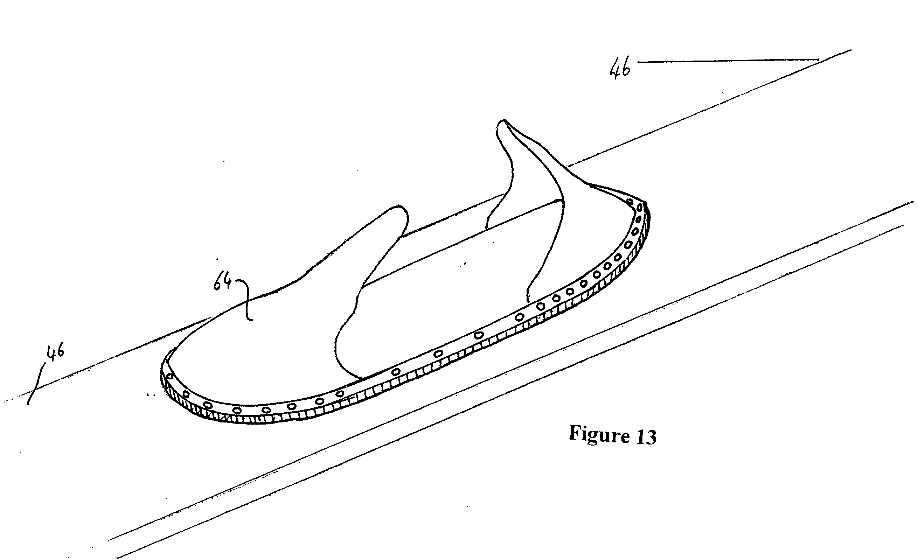

The skis will generally have a boot binding 64 (see Figure 12 and 13), e.g. of a type customary found in water skis. Arrows 58 indicate that the skis 46 can be moved inwardly and outwardly with respect to each other, subject to the constraints of the tie 36, and this is done by the skier pulling his legs together or pushing his legs apart using his feet engaged in the bindings 64. In addition, the frame 10 can be tilted by leaning on one end of the handle bars 26, as shown by arrow 60 (see Figure 7).

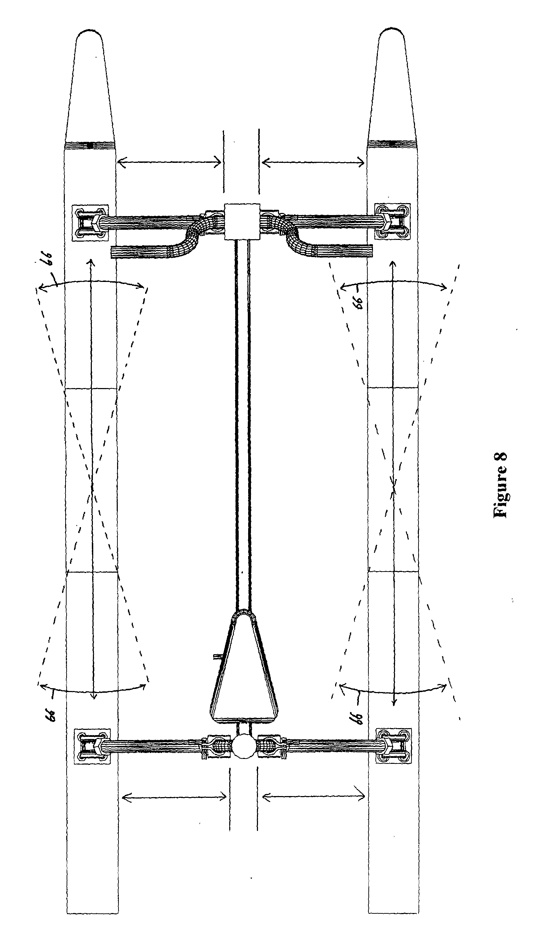

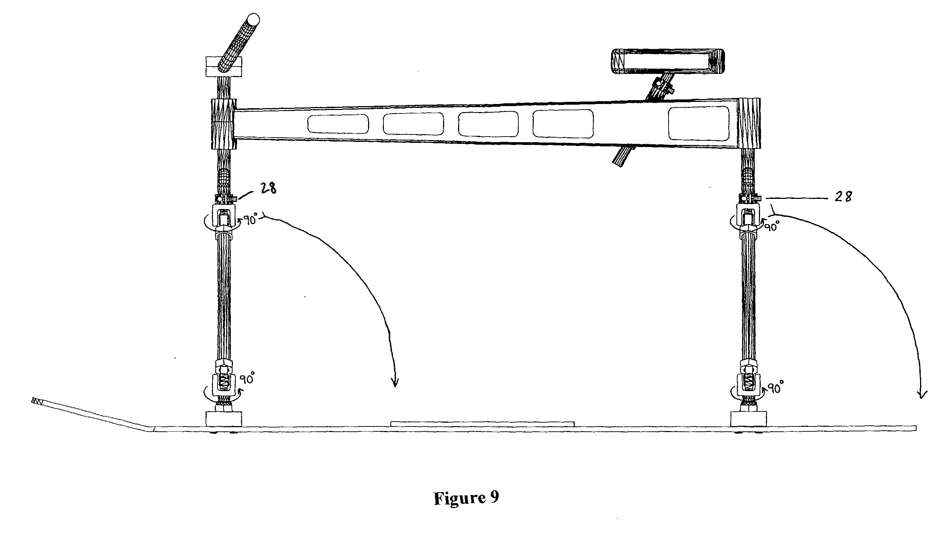

Referring now to Figure 9, it is not necessary for the skis always to remain parallel. A user can therefore turn one of the skis by his feet engaged in the bindings 64 to make the skis non-parallel, as shown by arrows 66 in Figure 8. This is useful in turning and slowing down.

Referring now to Figure 9, the device can be compacted for storage and/or transport. To achieve this, the skis are brought together as closely as possible so that the front and rear legs 34 are vertical and the quick release couplings 28 are released. Once the clamps 28 have been released, the legs 34 and the clavises at each end 26, 40 can be rotated about a vertical axis through 90°. This is possible because the upper clavises are not screwed tightly into its respective fork end 24. The rotation means that the pins 27 and 39 in each upper and lower clavis 26,38 are turned from lying parallel to the frame axis to lying transversely to the frame axis and such an arrangement allows the frame 11 to be moved rearwardly about the pins 27 and 39 in upper and lower clavises and their respective rod end sockets 32 to 40 (see Figure 9a). The handle bar clamp 25 can also be released and turned through 90° to reduce the width of the collapsed ski device.

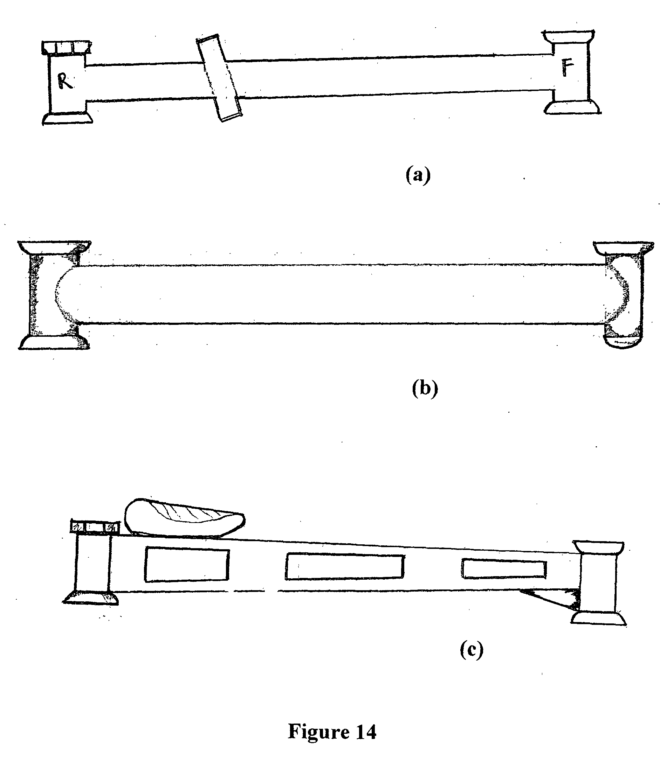

Figure 14 shows various alternative frames 11, all of which may be derived from standard bicycle frames. The frame shown in Figure 14a has a tubular construction with a tube 15 for holding the seat post 18. Front and rear headstocks 12,14 are also shown.

The arrangement shown in Figure 14b is similar to that shown in Figure 14a except that the tubular frame 14 has a larger diameter and no seat is provided. In the arrangement shown in Figure 14c the seat 16 is fixed on the girder frame 10.

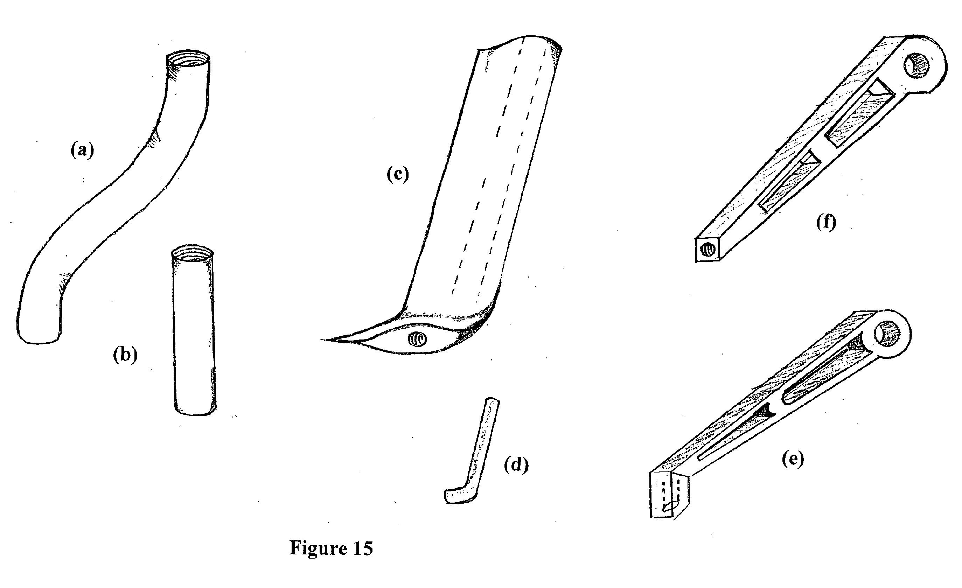

The legs 34 need not be straight; various alternative leg shapes 34 are shown in Figures 15a to f.

In order to use the device, a skier mounts it and, at its simplest, points the device downhill. The device provides a degree of balance and control of the skis that are only usually possessed by a fairly advanced skier. At the same time, the device can be easily manoeuvred. In order to turn right, a skier stands up on the skis and brings his legs (and hence also the skis) together and bends his left knee, shifting weight onto his left ski. He also pushes forward with his left ski and backward with his right ski, while also turning the handle 26 to the right. A left-hand turn is accomplished in a corresponding way.

In order to slow down, the front of the skis are made to point inwards and the rear of the skis are made to point outward in the manner described in connection with Figure 8 to form a "snowplough".

In order to bring the device to an abrupt halt, the legs and the skis are brought together and the frame 10 is tightly gripped between the legs, while simultaneously leaning back. The left knee is then bent and the handlebars are moved sharply to the right (thereby advancing the left ski and retiring the right ski) while pulling the frame hard to the left and angling the skier's body up the slope. This brings the skis perpendicular to the forward movement and hence stops further forward movement. A similar movement can be done to turn the device quickly.

The device can be propelled along flat terrain or uphill using poles and moving the skis alternately backwards and forwards. Alternatively, one of the skier's feet can be detached from the binding and he can propel himself along in the same manner as a skateboard.

## Claims

1. A skiing device comprising:
• a frame having a front end and a rear end and an axis extending between the front and the rear ends;
• a front shaft rotatably connected to the front end of the frame to allow the shaft to turn about an axis that is transverse to the axis of the frame;
• a handle to turn the front shaft;
• a pair of front legs each of which is mounted on the front shaft by a first pivot that allows the front legs to be brought together or splayed apart such that the angle of splay between the legs can varied;
• a rear shaft rotatably connected to the rear end of the frame to allow the rear shaft to turn about an axis that is transverse to the axis of the frame;
• a pair of rear legs each of which is mounted on the rear shaft by a second pivot that allows the rear legs to be brought together or splayed apart such that the angle of splay between the legs can varied; and
• pair of skis, each ski being secured to one front leg and one rear leg by joints that allow the legs to pivot with respect to the skis whereby each of the skis can be moved forwardly or backwardly with respect to the other by turning the handle.

2. A skiing device as claimed in claim 1, wherein the said joints connecting the skis to the legs each comprises a ball-and-socket joint.

3. A skiing device as claimed in claim 2, wherein the said joints connecting the skis to the legs each includes a pivot connected between the ball-and-socket joint and the end of each leg that allows the skis to pivot about an axis extending generally parallel to the skis.

4. A skiing device as claimed in any one of claims 1 to 3, wherein the front shaft includes a front fork and each of the front legs is pivotally mounted on one of the arms of the fork.

5. A skiing device as claimed in any one of claims 1 to 4, wherein the rear shaft includes a rear fork and each of the rear legs is pivotally mounted on one of the arms of the fork.

6. A skiing device as claimed in any one of claims 1 to 5, which includes at least one tie connecting the front legs and/or the back legs together to limit the angle of splay of the legs to a maximum value.

7. A skiing device as claimed in any one of claims 1 to 6, which includes a seat mounted on the frame.

8. A skiing device as claimed in any one of claims 1 to 7, wherein the handle comprises a pair of handlebars.

9. A skiing device as claimed in any one of claims 1 to 8, wherein the first and the second pivots can be reconfigured to allow the front and rear legs to pivot in a direction parallel to the frame, thereby allowing the device to be collapsed.
